# DEMANDE DE BREVET EUROPEEN

(11) **EP 1 241 551 A1**
(43) Date de publication de la demande: **18.09.2002**
(21) Numéro de dépôt: 02290149.0
(22) Date de dépôt: 21.01.2002
(51) Int. Cl.: G05D 16/06

(54) **Détendeur de gaz à organe de réglage de la pression débrayable**

(30) Priorité: 27.02.2001 FR 0102652
(71) Demandeur: TAEMA, F-92182 Antony Cédex (FR)
(72) Inventeur: Pingret, Stéphane, 91130 Ris Orangis (FR); Pin, Fabrice, 91230 Montgeron (FR); Meneuvrier, Mathieu, 91320 Wissous (FR)
(74) Mandataire: Pittis, Olivier

(57) **Abrégé**

L'invention concerne un dispositif de régulation de pression composé d'un corps principal (50) comprenant : un passage interne (53) de fluide avec une entrée (51) et une sortie de fluide (52) ; des moyens de détente (54, 55) de fluide étant agencés sur ledit passage (53) interne de fluide entre lesdites entrée (51) et sortie (52), et permettant d'opérer une réduction de la pression du fluide jusqu'au à une valeur de pression souhaitée ; des moyens de contrôle de pression (10, 11, 12) comportant un organe de réglage de pression (10) d'axe (AA), actionnable par un opérateur en translation selon l'axe (AA) et/ou en rotation selon ledit axe (AA), et apte à coopérer avec lesdits moyens de détente (54, 55) pour ajuster la valeur de pression souhaitée. L'organe de réglage de pression (10) comporte une partie centrale (11) et une partie périphérique (12) pouvant être solidarisées ou désolidarisées l'une de l'autre, et des moyens de solidarisation/libération (1, 2) permettant de rendre solidaires ou de désolidariser lesdites parties centrale (11) et périphérique (12), l'une de l'autre. Ensemble robinet-détendeur de gaz et appareil médical équipés d'un tel dispositif.

## Description

L'invention porte sur un organe de réglage débrayable, tel un bouton de réglage, pour dispositif de détente de gaz à pression de détente ajustable, notamment utilisable dans le domaine médical.

Afin de réaliser la détente d'un fluide, en particulier d'un gaz, depuis un premier niveau de pression (pression haute) jusqu'à un deuxième niveau de pression (pression basse) inférieur à la pression haute, il est d'usage d'utiliser des dispositifs de détente, plus simplement appelés détendeurs.

Le principe de fonctionnement d'un détendeur est parfaitement connu et ne sera pas détaillé ci-après. On peut citer, par exemple, les documents suivants qui traitent du sujet : US-A-5,086,807, US-A-3,937,243, US-A-6,170,519, US-A-6,003,545, US-A-5,411,053, US-A-5,522,421, US-A-5,392,825, US-A-5,123,442, US-A-4,450,858 et US-A-3,926,208.

Le réglage du niveau de pression souhaité se fait généralement au moyen d'un organe de réglage, tel qu'un bouton de manoeuvre, actionnable en rotation par l'opérateur, lequel organe de réglage coopère, directement ou indirectement, avec le mécanisme ou le système de détente proprement dit jusqu'à obtenir le réglage de pression désiré.

Or, avec les détendeurs existants, il existe un problème de déréglage intempestif possible du niveau de pression sélectionné, notamment pendant le stockage du détendeur ou lors de son nettoyage, ou résultant d'une manipulation malveillante ou involontaire de l'organe de réglage du détendeur.

On comprend aisément que lorsqu'un détendeur est utilisé pour alimenter un appareil médical d'assistance respiratoire, tout déréglage de la pression de détente peut conduire à un sérieux problème de sécurité pour le patient alimenté avec ce gaz, en particulier conduire à des barotraumatismes.

La présente invention s'inscrit dans ce contexte et a pour but de proposer un détendeur amélioré, c'est-à-dire un détendeur équipé d'un système empêchant tout déréglage intempestif et/ou involontaire du niveau de pression souhaité.

L'invention concerne alors un dispositif de régulation de pression permettant de réguler ou ajuster la pression d'un fluide, notamment d'un gaz, comportant un corps principal comprenant :
- au moins un passage interne de fluide comportant une entrée de fluide par laquelle un fluide à une première valeur de pression pénètre dans ledit passage interne et une sortie de fluide par laquelle le fluide à une deuxième valeur de pression est extrait dudit passage interne, ladite deuxième valeur de pression étant inférieure à ladite première valeur de pression,
- des moyens de détente de fluide étant agencés sur ou dans ledit passage interne de fluide, entre lesdites entrée et sortie de fluide, et permettant d'opérer une réduction de la pression du fluide depuis ladite première valeur de pression jusqu'au ladite deuxième valeur de pression souhaitée,
- des moyens de contrôle de pression comportant un organe de réglage de pression d'axe AA, actionnable par un opérateur en translation selon l'axe AA et/ou en rotation selon ledit axe AA, et apte à coopérer avec lesdits moyens de détente pour permettre de régler ou d'ajuster la deuxième valeur de pression souhaitée,
caractérisé en ce que l'organe de réglage de pression comporte :
- au moins une partie centrale et une partie périphérique pouvant être solidarisées ou désolidarisées l'une de l'autre, et
- des moyens de solidarisation/libération permettant de rendre solidaires ou de désolidariser lesdites parties centrale et périphérique, l'une de l'autre.

Selon le cas, le dispositif de régulation de pression de l'invention peut comprendre l'une ou plusieurs des caractéristiques suivantes :
- les moyens de solidarisation/libération permettent de rendre solidaires lesdites parties centrale et périphérique, l'une de l'autre, de manière telle qu'un actionnement par l'opérateur, en rotation autour de l'axe AA, de la partie périphérique entraîne au moins un déplacement en translation selon l'axe AA de la partie centrale de l'organe de réglage.
- les moyens de solidarisation/libération permettent de désolidariser lesdites parties centrale et périphérique, l'une de l'autre, de manière telle qu'un actionnement par l'opérateur, en rotation autour de l'axe AA, de la partie périphérique n'entraîne aucun déplacement en translation selon l'axe AA de la partie centrale de l'organe de réglage.
- lesdits moyens de détente comprennent au moins un clapet de détente et un siège de clapet, et la partie centrale de l'organe de réglage agit, directement ou indirectement, sur ledit clapet en une force proportionnelle à la pression souhaitée.
- les moyens de solidarisation/libération comprennent au moins un ergot porté par l'une desdites parties centrale et périphérique, et au moins un évidement et au moins une gorge portées par l'autre desdites parties centrale et périphérique, de préférence plusieurs ergots et plusieurs évidements.
- pour solidariser, l'une de l'autre, lesdites parties centrale et périphérique, au moins un ergot porté par la paroi interne de la partie périphérique de l'organe coopère avec au moins avec au moins un évidement porté par la partie centrale, ledit ergot venant se loger dans ledit évidement de manière à ce qu'un actionnement en rotation autour de l'axe AA de la partie périphérique de l'organe engendre un déplacement au moins en translation selon l'axe AA de ladite partie centrale.
- pour désolidariser, l'une de l'autre, lesdites parties centrale et périphérique, au moins un ergot porté par la paroi inteme de la partie périphérique de l'organe coopère avec au moins une gorge agencée sur la périphérie externe de la partie centrale, ledit ergot venant se loger dans ladite gorge de manière à ce que la partie périphérique de l'organe puisse tourner librement en rotation autour de ladite partie centrale sans entraîner ladite partie centrale.
- l'organe de réglage comporte, en outre, des moyens de maintien en position permettant d'assurer le maintien en position solidarisée ou en position désolidarisée desdites parties centrale et périphérique, de préférence les moyens de maintien en position sont une ou plusieurs cages à billes.
- l'organe de réglage est conformé en un bouton rotatif actionnable manuellement par l'opérateur.

L'invention porte aussi sur un ensemble robinet-détendeur de gaz comportant un dispositif de régulation de pression selon l'invention, ainsi qu'un appareil médical alimenté en gaz par un tel dispositif de régulation de pression.

Selon encore un autre aspect, l'invention conceme un organe de réglage rotatif d'axe AA actionnable manuellement par un opérateur, en particulier de type bouton de réglage rotatif, comportant
- au moins une partie centrale et une partie périphérique pouvant être solidarisées ou désolidarisées l'une de l'autre, et mobiles l'une par rapport à l'autre en rotation et/ou en translation, et
- des moyens de solidarisation/libération permettant de rendre solidaires ou, à l'inverse, de désolidarisées lesdites parties centrale et périphérique, l'une de l'autre, de manière telle que, lorsque lesdites parties centrale et périphérique sont solidarisées l'une à l'autre, un actionnement par l'opérateur, en rotation autour de l'axe AA, de la partie périphérique entraîne au moins un déplacement en translation selon l'axe AA de la partie centrale de l'organe de réglage et, à l'inverse, que, lorsque lesdites parties centrale et périphérique sont désolidarisées l'une de l'autre, un actionnement en rotation autour de l'axe AA de la partie périphérique n'entraîne aucun déplacement en translation selon l'axe AA de la partie centrale de l'organe de réglage.

Selon le cas, l'organe de l'invention peut comprendre l'une ou plusieurs des caractéristiques suivantes :
- les moyens de solidarisation/libération comprennent au moins un ergot porté par l'une desdites parties centrale et périphérique, et au moins un évidement et au moins une gorge portées par l'autre desdites parties centrale et périphérique, de préférence plusieurs ergots et plusieurs évidements.
- pour rendre solidaire, l'une de l'autre, lesdites parties centrale et périphérique, au moins un ergot porté par la paroi interne de la partie périphérique de l'organe coopère avec au moins avec au moins un évidement porté par la partie centrale, ledit ergot venant se loger dans ledit évidement de manière à ce qu'un actionnement en rotation autour de l'axe AA de la partie périphérique de l'organe engendre un déplacement au moins en translation selon l'axe AA de ladite partie centrale, et/ou, pour désolidariser, l'une de l'autre, lesdites parties centrale et périphérique, au moins un ergot porté par la paroi interne de la partie périphérique de l'organe coopère avec au moins une gorge agencée sur la périphérie externe de la partie centrale, ledit ergot venant se loger dans ladite gorge de manière à ce que la partie périphérique de l'organe puisse tourner librement en rotation autour de ladite partie centrale sans entraîner ladite partie centrale.
- il comporte, en outre, des moyens de maintien en position permettant d'assurer le maintien en position solidarisée ou en position désolidarisée desdites parties centrale et périphérique, de préférence les moyens de maintien en position sont une ou plusieurs cages à billes.

L'invention va être mieux comprise grâce à la description donnée ci-après des figures annexées parmi lesquelles :
- la figure 1 représente une vue schématique en coupe longitudinale d'un organe de réglage selon l'invention en position débrayée,
- la figure 2 est analogue à la figure 1 mais montre l'organe de réglage en position embrayée,
- la figure 3 représente une vue de côté de la partie centrale de l'organe de réglage des figures 1 et 2,
- et la figure 4 est une vue en coupe longitudinale schématique d'un organe de réglage selon les figures 1 à 3 monté sur un détenteur de gaz et servant à régler le niveau de pression de détente délivrée par ce détendeur.

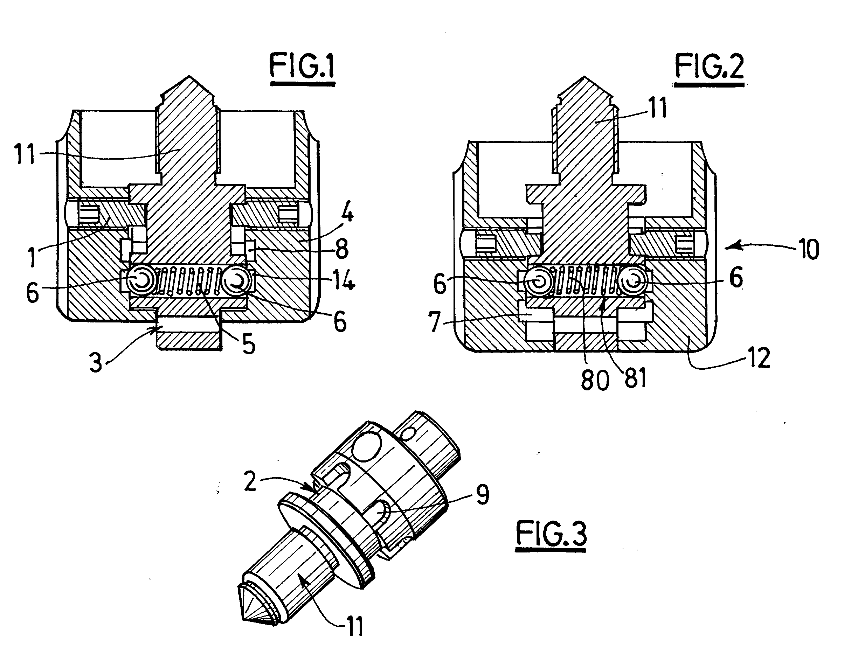

Sur les figures 1 à 4, les mêmes parties sont désignées par les mêmes références.

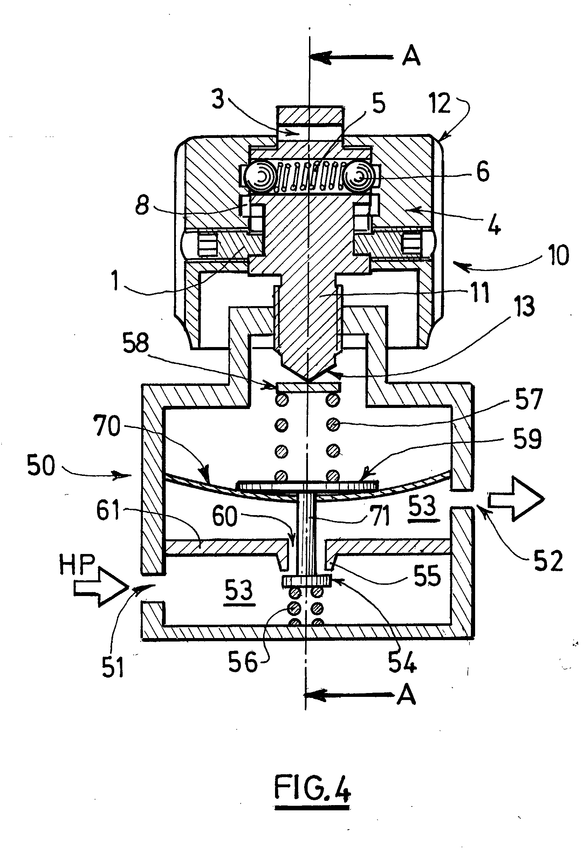

Sur la figure 4, on voit le schéma de principe du fonctionnement d'un dispositif de régulation de pression selon l'invention, permettant de réguler ou ajuster la pression d'un fluide, ici d'un gaz, c'est-à-dire un détendeur de gaz utilisable notamment dans le domaine médical.

Ce détendeur comprend un corps principal 50 comprenant un passage interne 53 de gaz muni d'une entrée de gaz 51 par laquelle le gaz à haute pression (HP) pénètre dans le passage interne 53 et une sortie 52 de gaz après détente par laquelle le gaz détendu à la valeur de pression de détente souhaitée ou basse pression (BP) est extrait du passage interne 53 et est donc délivré par le détendeur à l'utilisateur.

De façon habituelle, des moyens de détente 54, 55 de gaz sont agencés dans le passage 53 entre les entrée 51 et sortie 52 de fluide, et servent à opérer la réduction de pression du gaz désirée.

Les moyens de détente comprennent ici un clapet de détente 54 coopérant avec un siège de clapet 55 situé à la périphérie d'un orifice de détente 60 porté par la cloison 61 agencée à l'intérieur du passage 53 en y formant une chambre à haute pression (côté orifice 51) et une chambre basse pression (côté orifice 52). Le clapet de détente 54 est normalement repoussé car son siège 55 par un moyen élastique, tel un ressort 56, de manière à obturer l'orifice 60 de manière étanche et empêcher ainsi tout passage de gaz depuis la chambre haute pression vers la chambre basse pression.

En outre, une paroi 70 étanche mobile et/ou déformable, située du côté de la chambre basse pression, permet d'isoler l'organe de réglage 10 de pression du gaz sous pression présent dans ladite chambre basse pression et refermer le clapet 54 par l'intermédiaire de l'axe 71 lorsque la pression BP est trop forte dans la chambre 53.

Le clapet 54 comprend une partie oblongue 71 traversant la cloison 61 par l'orifice 60 de détente, ladite partie oblongue 71 ayant une dimension, c'est-à-dire un diamètre, inférieur à celui de l'orifice de manière à ne pas obturer totalement cet orifice 60 et permettre ainsi une circulation fluidique au travers de celui-ci.

La partie oblongue 71 traverse aussi de manière étanche la paroi 70 et comprend, en outre, une extrémité terminale 59 située de l'autre côté de la paroi 70 et sur laquelle vient agir un moyen élastique 57, tel un ressort, sur lequel agissent, directement ou indirectement, par exemple par l'intermédiaire d'une pièce intermédiaire 58, des moyens de contrôle de pression, en particulier l'organe de réglage 10, de manière à permettre un réglage du niveau de pression de détente désiré, lequel sera fonction de la pression réglée sur le ressort 57.

En effet, l'organe de réglage de pression 10, d'axe AA, actionnable par un opérateur en translation selon l'axe AA et/ou en rotation selon ledit axe AA, est apte à coopérer avec lesdits moyens de détente 54, 55 pour permettre de régler ou d'ajuster la deuxième valeur de pression souhaitée.

Ainsi, lorsque l'opérateur opère un vissage manuel de l'organe de réglage de pression 10, la force de rotation appliquée à l'organe 10 va être convertie en force de translation et l'organe 10 va aller appuyer sur la pièce intermédiaire 58, qui transmettra alors cette force de poussée au ressort 57 qui lui même agira dans le même sens sur l'extrémité terminale 59 de la pièce oblongue 71 portant le clapet 54, ce qui tendra à éloigner le clapet 54 du siège 55 et donc à laisser du gaz passer par l'orifice de détente 60 ; le ressort 56 étant quant à lui comprimé. Plus le ressort 57 est comprimé plus la pression dans la chambre 53 devra être élevée pour obtenir l'équilibre de la partie mobile.

A l'inverse, en opérant un vissage dans le sens rotatoire opposé, on diminue la pression sur le ressort, et donc on diminue le niveau de pression de détente.

Selon l'invention, l'organe de réglage de pression 10 comporte une partie centrale 11 d'axe AA et une partie périphérique 12, également d'axe AA, pouvant être solidarisées ou désolidarisées l'une de l'autre, la partie périphérique 12 formant au moins partiellement manchon autour de la partie centrale 11.

Des moyens de solidarisation/libération 1, 2 permettent de désolidariser, à volonté, lesdites parties centrale 11 et périphérique 12, l'une de l'autre, ce qui permet d'éviter que toute manipulation intempestive de l'organe de réglage ne conduise à un déréglage de la pression de détente désirée puisque, lorsqu'elles sont désolidarisées, la partie périphérique 12 n'interagit plus avec la partie centrale 11, c'est-à-dire qu'un actionnement, en rotation autour de l'axe AA, de la partie périphérique 12 n'entraînera aucun déplacement en translation selon l'axe AA de la partie centrale 11 de l'organe de réglage 10 et ne conduira donc pas non plus à un actionnement des moyens de détente car seule la centrale 11 de l'organe de réglage 10 peut agir sur ceux-ci, comme expliqué ci-dessus.

A l'inverse, pour opérer un réglage de la pression, les moyens de solidarisation/libération 1, 2 permettent aussi de rendre solidaires lesdites parties centrale 11 et périphérique 12, l'une de l'autre, de manière telle qu'un actionnement en rotation autour de l'axe AA, de la partie périphérique 12 entraînera au moins un déplacement en translation selon l'axe AA de la partie centrale 11 de l'organe de réglage 10 et donc il se produira un écartement ou un rapprochement du clapet 54 de son siège, comme expliqué ci-dessus.

Comme visible sur les figures 1 à 3, les moyens de solidarisation/libération 1, 2 de l'organe de réglage 10 comprennent ici plusieurs ergots 1 portés par la partie périphérique 12 et plusieurs évidements 9 et une gorge 2 portés par la partie centrale 11.

Pour solidariser, l'une à l'autre, lesdites parties centrale 11 et périphérique 12, les ergots 1 viennent se loger chacun dans un évidements 9 de manière à ce qu'un actionnement en rotation autour de l'axe AA de la partie périphérique 12 engendre un déplacement au moins en translation selon l'axe AA de ladite partie centrale 11 puisque les ergots empêchent et s'opposent alors toute rotation indépendante de la partie périphérique 12 par rapport à la partie centrale 11.

A l'inverse, en position désolidarisée, les ergots 1 portés par la paroi interne de la partie périphérique 12 de l'organe 10 viennent se loger dans une gorge 2 aménagée annulairement dans la paroi externe de la partie centrale 11 de manière à ce que la partie périphérique 12 de l'organe 10 puisse tourner librement et indépendamment en rotation autour de ladite partie centrale 11 sans entraîner ladite partie centrale 11 ; les ergots 1 coulissant alors dans la gorge 2 périphérique.

Afin d'assurer le maintien en position solidarisée ou en position désolidarisée desdites parties centrale 11 et périphérique 012, l'organe de réglage 10 comporte avantageusement des moyens de maintien en position 5, 6, 16 telles une ou plusieurs cages à billes.

Dit autrement, en position débrayée (figure 1), les deux ergots 1 se trouvent dans la gorge 2 de la partie centrale 11, encore appelée vis de détente. Lorsque le bouton 10 est manoeuvré par l'opérateur, les ergots 1 coulissent dans cette gorge 2 et la vis de détente 11 n'est donc pas entraînée. Le maintien en position débrayée est assuré par l'intermédiaire d'un ressort et de deux billes se déplaçant dans un logement 80 traversant diamétralement la partie centrale 11 en se reposant mutuellement l'une l'autre de par la présence d'un ressort 81 située dans le logement 80 entre lesdites billes 6.

En position embrayée (figure 2), ces billes 6 se retrouvent dans une gorge 14 aménagée dans la paroi interne de la partie périphérique 12 assurant ainsi le maintien du bouton dans cette deuxième position. Les ergots 1 se trouvent placés chacun dans une des six encoches ou évidements 9 permettant alors l'entraînement en rotation de la vis de détente 11, lors de la manoeuvre du bouton 10 par l'opérateur.

Lorsque le réglage de la pression est réalisé, le retour en position débrayée permet de poser un plomb dans un autre logement 3 situé sur la partie amont de la partie centrale 11, ce qui empêche alors de revenir en position embrayée, donc de dérégler cette pression.

La présente invention est utilisable non seulement sur une canalisation ou un réseau de canalisation de gaz mais aussi pour alimenter des appareils médicaux fonctionnant à pression fixe ou variable.

## Revendications

1. Dispositif de régulation de pression permettant de réguler ou ajuster la pression d'un fluide, notamment d'un gaz, comportant un corps principal (50) comprenant :
- au moins un passage interne (53) de fluide comportant une entrée de fluide (51) par laquelle un fluide à une première valeur de pression pénètre dans ledit passage interne (53) et une sortie de fluide (52) par laquelle le fluide à une deuxième valeur de pression est extrait dudit passage interne (53), ladite deuxième valeur de pression étant inférieure à ladite première valeur de pression,
- des moyens de détente (54, 55) de fluide étant agencés sur ou dans ledit passage (53) interne de fluide, entre lesdites entrée (51) et sortie (52) de fluide, et permettant d'opérer une réduction de la pression du fluide depuis ladite première valeur de pression jusqu'au ladite deuxième valeur de pression souhaitée,
- des moyens de contrôle de pression (10, 11, 12) comportant un organe de réglage de pression (10) d'axe (AA), actionnable par un opérateur en translation selon l'axe (AA) et/ou en rotation selon ledit axe (AA), et apte à coopérer avec lesdits moyens de détente (54, 55) pour permettre de régler ou d'ajuster la deuxième valeur de pression souhaitée,
**caractérisé en ce que** l'organe de réglage de pression (10) comporte :
- au moins une partie centrale (11) et une partie périphérique (12) pouvant être solidarisées ou désolidarisées l'une de l'autre, et
- des moyens de solidarisation/libération (1, 2) permettant de rendre solidaires ou de désolidariser lesdites parties centrale (11) et périphérique (12), l'une de l'autre.

2. Dispositif selon la revendication 1, **caractérisé en ce que** les moyens de soiidarisation/libération (1, 2) permettent de rendre solidaires lesdites parties centrale (11) et périphérique (12), l'une de l'autre, de manière telle qu'un actionnement par l'opérateur, en rotation autour de l'axe (AA), de la partie périphérique (12) entraîne au moins un déplacement en translation selon l'axe (AA) de la partie centrale (11) de l'organe de réglage (10).

3. Dispositif selon l'une des revendications 1 ou 2, **caractérisé en ce que** les moyens de soiidarisation/libération (1, 2) permettent de désolidariser lesdites parties centrale (11) et périphérique (12), l'une de l'autre, de manière telle qu'un actionnement par l'opérateur, en rotation autour de l'axe (AA), de la partie périphérique (12) n'entraîne aucun déplacement en translation selon l'axe (AA) de la partie centrale (11) de l'organe de réglage (10).

4. Dispositif selon l'une des revendications 1 à 3, **caractérisé en ce que** lesdits moyens de détente (54, 55) comprennent au moins un clapet de détente (54) et un siège de clapet (55), et **en ce que** la partie centrale (11) de l'organe de réglage (10) agit, directement ou indirectement, sur ledit clapet (54) en une force proportionnelle à la pression souhaitée.

5. Dispositif selon l'une des revendications 1 à 4, **caractérisé en ce que** les moyens de soiidarisation/libération (1, 2) comprennent au moins un ergot (1) porté par l'une desdites parties centrale (11) et périphérique (12), et au moins un évidement (9) et au moins une gorge (2) portées par l'autre desdites parties centrale (11) et périphérique (12), de préférence plusieurs ergots (1) et plusieurs évidements (9).

6. Dispositif selon l'une des revendications 1 à 5, **caractérisé en ce que**, pour solidariser, l'une de l'autre, lesdites parties centrale (11) et périphérique (12), au moins un ergot (1) porté par la paroi inteme de la partie périphérique (12) de l'organe (10) coopère avec au moins avec au moins un évidement (9) porté par la partie centrale (11), ledit ergot (1) venant se loger dans ledit évidement (9) de manière à ce qu'un actionnement en rotation autour de l'axe (AA) de la partie périphérique (12) de l'organe (10) engendre un déplacement au moins en translation selon l'axe (AA) de ladite partie centrale (11).

7. Dispositif selon l'une des revendications 1 à 6, **caractérisé en ce que**, pour désolidariser, l'une de l'autre, lesdites parties centrale (11) et périphérique (12), au moins un ergot (1) porté par la paroi interne de la partie périphérique (12) de l'organe (10) coopère avec au moins une gorge (2) agencée sur la périphérie externe de la partie centrale (11), ledit ergot (1) venant se loger dans ladite gorge (2) de manière à ce que la partie périphérique (12) de l'organe (10) puisse tourner librement en rotation autour de ladite partie centrale (11) sans entraîner ladite partie centrale (11).

8. Dispositif selon l'une des revendications 1 à 7, **caractérisé en ce que** l'organe de réglage (10) comporte, en outre, des moyens de maintien en position (5, 6, 16) permettant d'assurer le maintien en position solidarisée ou en position désolidarisée desdites parties centrale (11) et périphérique (12), de préférence les moyens de maintien en position (5, 6, 16) sont une ou plusieurs cages à billes.

9. Dispositif selon la revendication 8, **caractérisé en ce que** l'organe de réglage (10) est conformé en un bouton rotatif actionnable manuellement par l'opérateur.

10. Ensemble robinet-détendeur de gaz comportant un dispositif selon l'une des revendications 1 à 9.

11. Appareil médical alimenté en gaz par un dispositif selon l'une des revendications 1 à 9.

12. Organe de réglage (10) rotatif d'axe (AA) actionnable manuellement par un opérateur, en particulier de type bouton de réglage rotatif, comportant
- au moins une partie centrale (11) et une partie périphérique (12) pouvant être solidarisées ou désolidarisées l'une de l'autre, et mobiles l'une par rapport à l'autre en rotation et/ou en translation, et
- des moyens de solidarisation/libération (1, 2) permettant de rendre solidaires ou, à l'inverse, de désolidarisées lesdites parties centrale (11) et périphérique (12), l'une de l'autre, de manière telle que, lorsque lesdites parties centrale (11) et périphérique (12) sont solidarisées l'une à l'autre, un actionnement par l'opérateur, en rotation autour de l'axe (AA), de la partie périphérique (12) entraîne au moins un déplacement en translation selon l'axe (AA) de la partie centrale (11) de l'organe de réglage (10) et, à l'inverse, que, lorsque lesdites parties centrale (11) et périphérique (12) sont désolidarisées l'une de l'autre, un actionnement en rotation autour de l'axe (AA) de la partie périphérique (12) n'entraîne aucun déplacement en translation selon l'axe (AA) de la partie centrale (11) de l'organe de réglage (10).

13. Organe selon la revendication 12, **caractérisé en ce que** les moyens de soiidarisation/libération (1, 2) comprennent au moins un ergot (1) porté par l'une desdites parties centrale (11) et périphérique (12), et au moins un évidement (9) et au moins une gorge (2) portées par l'autre desdites parties centrale (11) et périphérique (12), de préférence plusieurs ergots (1) et plusieurs évidements (9).

14. Organe selon l'une des revendications 12 ou 13, **caractérisé en ce que**, pour rendre solidaire, l'une de l'autre, lesdites parties centrale (11) et périphérique (12), au moins un ergot (1) porté par la paroi interne de la partie périphérique (12) de l'organe (10) coopère avec au moins avec au moins un évidement (9) porté par la partie centrale (11), ledit ergot (1) venant se loger dans ledit évidement (9) de manière à ce qu'un actionnement en rotation autour de l'axe (AA) de la partie périphérique (12) de l'organe (10) engendre un déplacement au moins en translation selon l'axe (AA) de ladite partie centrale (11)
et/ou **en ce que**, pour désolidariser, l'une de l'autre, lesdites parties centrale (11) et périphérique (12), au moins un ergot (1) porté par la paroi interne de la partie périphérique (12) de l'organe (10) coopère avec au moins une gorge (2) agencée sur la périphérie externe de la partie centrale (11), ledit ergot (1) venant se loger dans ladite gorge (2) de manière à ce que la partie périphérique (12) de l'organe (10) puisse tourner librement en rotation autour de ladite partie centrale (11) sans entraîner ladite partie centrale (11).

15. Organe selon l'une des revendications 12 à 14, **caractérisé en ce qu'**il comporte, en outre, des moyens de maintien en position (5, 6, 16) permettant d'assurer le maintien en position solidarisée ou en position désolidarisée desdites parties centrale (11) et périphérique (12), de préférence les moyens de maintien en position (5, 6, 16) sont une ou plusieurs cages à billes.
